Europäisches Patentamt

European Patent Office

Office européen des brevets

(11) Publication number: **0 150 059**
**B1**

(12) **EUROPEAN PATENT SPECIFICATION**

(45) Date of publication of patent specification: **02.08.89**

(21) Application number: **85100504.1**

(22) Date of filing: **18.01.85**

(51) Int. Cl.⁴: **C 09 D 3/74,** C 08 F 214/06,
C 08 L 27/06 // (C08F214/06,
210:02, 216:06)

(54) Metal container coating compostions comprising stable emulsions of water resistant vinyl chloride-ethylene copolymers.

<table>
<tr><td>

(30) Priority: **20.01.84 US 572726**
**20.06.84 US 622592**

(43) Date of publication of application:
**31.07.85 Bulletin 85/31**

(45) Publication of the grant of the patent:
**02.08.89 Bulletin 89/31**

(84) Designated Contracting States:
**DE FR GB**

(56) References cited:
**US-A-3 403 137**
**US-A-3 895 167**

</td><td>

(73) Proprietor: **AIR PRODUCTS AND CHEMICALS,
INC.**
**Route no. 222**
**Trexlertown Pennsylvania 18087 (US)**

(72) Inventor: **Iacoviello, John Generoso**
**4226 Valley Drive**
**Allentown, PA 18104 (US)**

(74) Representative: **Sandmair, Kurt, Dr. Dr. et al
Patentanwälte Schwabe, Sandmair, Marx
Postfach 86 02 45 Stuntzstrasse 16
D-8000 München 86 (DE)**

</td></tr>
</table>

The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 150 059 B1

## Description

Technical field

The present invention relates to vinyl chloride-ethylene copolymer emulsions and metal container coating compositions containing such emulsions.

Background of the invention

Emulsion polymerization processes employing polyvinyl alcohol or celluloses such as hydroxyethyl cellulose as the emulsifier, or protective colloid, yield emulsion polymer products widely used as adhesives, binders and coatings. Such products have historically been known to possess poor resistance to water, generally manifested as a loss of adhesive strength to the substrate on exposure to water or as an unattractive whitening characteristically known as "blushing". This poor water resistance property has inhibited the use of such polymers prepared in the presence of polyvinyl alcohol or celluloses as coatings coming in contact with water, for example, as interior can coatings.

To overcome this water sensitivity, crosslinking agents have been added to react with the polyvinyl alcohol of the polymer coating to render it water insoluble. However, such coatings still demonstrate the unattractive blushing on exposure to water. U.S. 2,843,562 attempts to overcome the water sensitivity of graft copolymers of polyvinyl alcohol and vinyl chloride by incorporating a small amount of a cross-linking monomer containing at least two olefinic unsaturations.

The inventor is aware that polymer emulsions which can deposit a polymer coating that has enhanced water resistance can be prepared by the aqueous emulsion polymerization of at least one ethylenically unsaturated monomer in a salt-free aqueous medium. The salt-free aqueous medium comprises a polyvinyl alcohol as the protective colloid and a redox system comprising hydrogen peroxide or an organic peroxy compound as the oxidant and an organic reductant. When this technology was applied to the preparation of vinyl chloride-ethylene copolymer emulsions using typical polymerization techniques including polyvinyl alcohol levels of 3 to 10 wt%, stable copolymer emulsions were not readily obtained. Another difficulty encountered is related to the solubility of the ethylene in that the ethylene pressure may rise uncontrollably during the polymerization reaction.

U.S. 3,399,157 teaches improving the stability of ethylene/vinyl chloride latexes by adding only a portion of the desired amount of emulsifying agent to the reaction mixture prior to the initiation of polymerization and adding a second portion to the reaction mixture after the polymerization is completed.

U.S. 3,501,440 discloses in Example 5 and reference Examples 5—6 the use of polyvinyl alcohol as the protective colloid in the copolymerization of ethylene with vinyl chloride at a reaction temperature between the critical temperature of ethylene and 60°C and at an ethylene pressure which is maintained substantially constant by withdrawing excess ethylene out of the reaction vessel during the polymerization.

U.S. 3,642,740 discloses that vinyl chloride homo- and copolymers can be prepared in aqueous emulsion using as the emulsifier system an alkali metal salt of a sulfated $C_8$—$C_{18}$ fatty alcohol, a tallow fatty alcohol or an epoxidized unsaturated fatty acid oil, and a complex organic phosphate ester or salt derivative. Example 1 shows that the emulsion used in preparing the molding paste resin product involves the preparation of a polymer seed latex.

U.S. 3,689,447 discloses that heat resistant copolymers of ethylene and vinyl chloride can be prepared by the use of a seed latex in the aqueous composition for emulsion polymerization, together with heat-activated initiation at between about 50 and 85°C by water-soluble persulfates or peroxydiphosphates. The seed latex can be prepared by the emulsion polymerization of any polymerizable ethylenically unsaturated compound. The seed latex can be prepared beforehand in a separate vessel and a desired aliquot can then be introduced into the aqueous composition. Alternatively, the seed latex can be made in situ in all or part of the aqueous composition before the reactor is pressurized with ethylene.

U.S. 3,725,367 describes a process for the preparation of polymers and copolymers having a vinyl base which comprises dispersing into the organic vinyl based monomeric system a seeding latex containing an excess amount of organo-soluble catalyst such that the seeding latex forms the dispersed phase and the organic monomeric system the continuous phase.

U.S. 3,736,303 discloses a latex composition comprising a copolymer of vinylidene chloride, an ethylenically unsaturated sulfur acid having sulfur in a valent state of 6, optionally an ethylenically unsaturated carboxylic acid and another ethylenically unsaturated monomer prepared using a seed latex, an ascorbic acid-hydrogen peroxide redox system, and ionic buffers and surfactants.

U.S. 3,875,130 discloses the preparation of homo- and copolymers of vinyl chloride in which the polymerization of the monomer composition is carried out in the presence of a seeding product prepared by the polymerization in emulsion or fine suspension.

U.S. 4,150,210 discloses a one-step process for the emulsion polymerization of vinyl chloride and, optionally, comonomers using a water-soluble initiator or initiator system and a mixed emulsifier of (1) a $C_{12}$—$C_{18}$ straight chain alkyl or alkenyl surfactant: (2) a $C_{14}$—$C_{20}$ straight chain alkyl or alkenyl alcohol; and (3) a $C_5$—$C_8$ straight alkyl chain sulfosuccinate emulsifier. The examples show the use of a hydrogen peroxide-ascorbic acid redox system.

U.S. 4,189,415 discloses aqueous vinyl chloride-vinyl acetate-ethylene copolymer dispersions containing only polyvinyl alcohol as the protective colloid. All of the polyvinyl alcohol or only part of it can be introduced at the beginning, the ethylene pressure applied is kept constant and the polymerization temperature is 10—85°C, preferably 20—50°C.

U.S. 4,331,577 discloses a method for preparing ethylene-containing copolymer emulsions by the selective addition of the monomers mixture to the reactor in response to pressure variation and the maintenance of a monomer unsaturated condition in the reactor.

U.S. 3,403,137 discloses a process for preparing ethylene/vinyl chloride copolymers by emulsions polymerization of vinyl chloride and ethylene in the presence of an emulsifier system. The emulsifying agent may be ionic or non-ionic; in some examples polyvinyl alcohol is used as a minor component of the emulsifier system, in combination with a major amount of an anionic surfactant.

U.S. 3 895 167 discloses a method for coating metal substrates with a coating composition which is comprised of a vinyl chloride/alkene copolymer, prepared by known methods, and a heat curable, thermosetting aminoplast resin mixture.

Summary of the invention

The present invention provides stable vinyl chloride-ethylene copolymer emulsions which can deposit a polyvinyl alcohol-containing polymeric coating on a substrate that demonstrates enhanced water resistance and adhesion to the substrate.

The stable resin emulsion comprises from 20 to 70% of a copolymer colloidally dispersed in an aqueous medium, the copolymer comprising about 65 to 90 wt% vinyl chloride, about 5 to 35 wt% ethylene, and 0 to about 10 wt% olefinically unsaturated copolymerizable monomer and having a Tg from about 0 to 50°C. The copolymer is prepared by emulsion polymerization, preferably in a substantially salt-free aqueous medium, in the presence of about 3 to 15 wt% polyvinyl alcohol as the dispersing, or emulsifying agent. The wt% values are based on monomers incorporated into the copolymer.

With regard to the invention, "salt-free" means the substantial absence of ionic materials, that is to say the presence of ionic materials at less than about 0.1 wt% based on solids. Accordingly, the free radical generating source for initiating and sustaining the polymerization process would be a redox system comprising hydrogen peroxide or an organic peroxy compound as the oxidant and an organic reductant.

According to the invention the polymerization process comprises

(a) forming an aqueous emulsion reaction mixture containing substantially all the polyvinyl alcohol and a portion, preferably at least 5%, of the total vinyl chloride monomer,

(b) pressurizing the reaction mixture with an ethylene pressure sufficient to provide the copolymer with about 5 to 35 wt% ethylene content,

(c) initiating the reaction mixture by the addition of a free radial forming source and the continuing polymerization until the rate of polymerization begins to decrease,

(d) adding the remaining vinyl chloride, preferably at a substantially uniform rate over a period of time, while continuing polymerization until the reaction is no longer self sustaining, and

(e) removing the unreacted ethylene and reducing the vinyl chloride free monomer content, preferably to less than 10 ppm.

Particular embodiments of the invention, in addition to the resin emulsions, are a metal container, such as a metal can, coated with a polymeric film deposited from the vinyl chloride-ethylene copolymer emulsions and metal container coating compositions containing such emulsions and crosslinking agents or resins.

As an advantage of the invention, the emulsion polymerization process provides vinyl chloride-ethylene copolymer emulsions possessing enhanced stability compared to copolymers prepared using conventional copolymerization techniques.

As another advantage the vinyl chloride-ethylene copolymer emulsions deposit polymeric films of dramatically improved water resistance, especially if prepared in a salt-free medium. It is not necessary to use crosslinking agents to provide a high degree of water resistance although such agents can be used. In addition, compared to standard vinyl chloride-ethylene products the copolymers of this invention show improved dry film tensile hardness and improved adhesion to various substrates including wood, glass and metals such as steel and aluminum.

Detailed description of the invention

The vinyl chloride-ethylene copolymers of the stable emulsions according to the invention contain about 65 to 90 wt% vinyl chloride, preferably about 75 to 80 wt%. The copolymerization reaction is performed under an ethylene pressure which is sufficient to provide the copolymer with about 5 to 35 wt% ethylene content, preferably about 20 to 25 wt%. Pressures of about 5 to 10 MPa (50 to 100 atm) are generally used to afford such ethylene content. When the vinyl chloride content is less than about 65 wt%, the requisite ethylene pressures are difficult to handle and at greater than about 90 wt% vinyl chloride stability becomes a problem.

The vinyl chloride-ethylene copolymers may also contain up to about 10 wt% of other olefinically unsaturated monomers copolymerizable with vinyl chloride and ethylene. By way of illustration, other suitable olefinically unsaturated co-monomers for making the stable copolymer emulsions and water resistant copolymers of the invention include vinyl esters of $C_1$—$C_{12}$ alkanoic acids, such as vinyl formate, vinyl propionate, and especially vinyl acetate; $C_3$—$C_{10}$ alkenoic acids, such as acrylic acid and methacrylic acid, and alpha, beta-unsaturated $C_4$—$C_{10}$ alkanoic acids, such as crotonic acid, isocrotonic acid, and their esters with $C_1$—$C_{18}$ alkanols such as methanol, ethanol, propanol and butanol, as well as 2-ethylhexyl alcohol, cyclohexyl alcohol and lauryl alcohol; vinylidene halides, such as vinylidene chloride; styrene; alpha, beta-unsaturated $C_4$—$C_{10}$ alkenedioic acids such as maleic acid, fumaric acid and itaconic acid and their monoesters and diesters of $C_1$—$C_{18}$ alkanols; and nitrogen containing monoolefinically unsaturated monomers, particularly nitrides, amides, N-methylol amides, lower alkanoic acid esters of N-methylol amides, lower alkyl ethers of N-methylol amides and allyl carbamates, such as acrylonitrile, acrylamide, methacrylamide, N-methylolacrylamide N-methylol methacrylamide, N-methylol allyl carbamate, N-methylol lower alkyl ethers or N-methylol lower alkanoic acid esters of N-methylolacrylamide, N-methylol methacrylamide and N-methylol allyl carbamate, such as N-isobutoxymethylacrylamide. The preferred comonomers for the vinyl chloride-ethylene polymers are the $C_3$—$C_{10}$. alkenoic acids and nitrogen-containing monomers, such as acrylic acid, acrylamide, N-methylolacrylamide and N - isobutoxymethylacrylamide, preferably in about 1 to 5 wt%.

The dispersing agent, or protective colloid, used in preparing the stable emulsions is at least one polyvinyl alcohol. A single polyvinyl alcohol may be used alone or mixtures of different polyvinyl alcohols can be used. Substantially the entire amount of polyvinyl alcohol is added to the aqueous medium prior to initiation.

The polyvinyl alcohols which are suitable for use in the invention are, in general, 30 to 99 mole% hydrolyzed, preferably 87 to 89 mole%, and have a degree of polymerization ranging from 100 to 10,000, preferably 200 to 2,500. The amount of polyvinyl alcohol used in the polymerization reaction is about 3 to 15 wt%, preferably 4 to 10 wt%, based on monomers, substantially all of which is added initially to the aqueous medium, i.e. prior to initiation of polymerization. Less than about 3 wt% polyvinyl alcohol is unsuitable for providing stable copolymer emulsions because of emulsion coagulum while greater than 15% polyvinyl alcohol is generally unsuitable because of high viscosity at commercially acceptable solids.

Additional amounts of polyvinyl alcohol can be added to the reaction mixture during polymerization provided that at least about 3 wt%, preferably at least about 4 wt%, polyvinyl alcohol is present in the reaction mixture upon initiation. Such delay addition of polyvinyl alcohol does not enhance stability and may possibly adversely affect water resistance of the copolymer.

For polymerization recipes containing up to about 8 wt% polyvinyl alcohol, a polyvinyl alcohol resin having a degree of polymerization of less than about 2500 should be used, and at about 8 to 15 wt% a polyvinyl alcohol of less than about 1000 degree of polymerization should be used.

Other protective colloids, such as the celluloses or hydroxyalkyl celluloses, or typical emulsifying agents such as ionic or nonionic surfactants in combination with the polyvinyl alcohol may be used in amounts up to about equal proportions, preferably less than 50%, based on weight of polyvinyl alcohol, although water resistance may be impaired.

Free radical sources, for example redox systems, used in the practice of this invention are conventional and used in conventional amounts. The polymerization is generally performed with quantities of redox system ranging from 0.03 to 3 wt% based on monomers. Typically, the entire quantity of either the oxidant or reductant component of the redox system, or a substantial portion, is introduced at the beginning and polymerization is initiated and controlled by metering in the other component. Obviously, the polymerization may be controlled by the simultaneous metering in of both components. Examples of the oxidizing component are ammonium persulfate, potassium persulfate, hydrogen peroxide and t-butyl hydroperoxide. Examples of the reducing component are sodium sulfite, sodium metabisulfite and zinc or sodium formaldehyde sulfoxylate.

Although the use of such conventional redox systems affords stable emulsions and vinyl chloride-ethylene copolymer coatings having improved water resistance, adhesion and tensile hardness, the resistance to water can be further enhanced by polymerization in a salt-free aqueous environment. Accordingly, the redox system must be salt-free, that is to say, nonionic as far as the oxidant and reductant are concerned.

For the salt-free system suitable oxidizing agents, or initiators, include hydrogen peroxide and organic peroxy compounds. Illustrative of the organic peroxides that can be used are alkylhydroperoxides such as t-butyl hydroperoxide, dialkyl peroxides such as di-t-butyl peroxide, peroxy acids such as peracetic acid and perbenzoic acid, diacyl peroxides such as diacetyl peroxide and dilauroyl peroxide, and peroxy esters such as t-butyl peracetate and t-butyl perbenzoate. The preferred oxidant for use in the invention is hydrogen peroxide.

The reductant component of the redox system used in the practice of the invention is a nonionic organic material such as a reducing sugar or other easily oxidizable polyhydroxy compound. Compounds frequently employed in this capacity are glucose, levulose, sorbose, invert sugar, ascorbic acid and its enantiomer erythorbic acid which are the preferred reductants, citric acid and the like. Other useful organic reductants include hydroxyl amines, thiols, pentamines and tartaric acid.

The preferred redox catalyst system for making stable vinyl chloride-ethylene copolymer emulsions comprises hydrogen peroxide and ascorbic acid or erythorbic acid.

The oxidizing agent is generally employed in an amount from about 0.01 to 1.0%, preferably 0.05 to 0.5%, based on the weight of monomers introduced into the polymerization system. The reductant is ordinarily added in an aqueous solution in the necessary equivalent amount. It is important that a reductant be present in the polymerization recipe because the oxidant, in most cases, does not furnish free radicals rapidly enough at temperatures below about 80°C to expeditiously effect polymerization of the monomers.

The salt-free redox catalyst system may contain promoters such as ferrous sulfate in typically minor amounts. Such minor amounts of ionic materials would not adversely affect the water resistance of the emulsion polymers.

Needless to say, the requirement of a salt-free aqueous medium rules out the use of ionic buffering agents as is so often used in many polymerization recipes for maintaining a particular pH range. However, it has been found that buffers are not required to make the emulsions whether or not salt-free conditions are used. Buffers may thus be used if desired.

The key to providing the stable vinyl chloride-ethylene copolymer emulsions of the invention is the particular emulsion polymerization procedure employed. The reaction temperature of the polymerization can be controlled by the rate of free radical source addition and by the rate of the heat removal. Generally, it is advantageous to maintain a mean temperature of about 55°C during the polymerization of the monomers and to avoid temperatures much in excess of 80°C. While temperatures as low as 0° can be used, economically the lower temperature limit is about 30°C.

The reaction time will vary depending upon other variables such as the temperature, free radical source, and the desired rate of the polymerization and reactor heat removal capacity. It is generally desirable to continue the reaction until the heat generation due to polymerization has subsided, i.e. the polymerization reaction is no longer self-sustaining.

In carrying out the polymerization, substantially all the polyvinyl alcohol and a portion of the vinyl chloride is initially charged to the polymerization vessel which is then pressurized with ethylene. Most advantageously, at least about 5% of the total vinyl chloride to be polymerized is initially charged, preferably at least about 15%. The remainder of the vinyl chloride is added, desirably at a substantially uniform rate, during the course of the polymerization after the initially charged vinyl chloride monomer content has been substantially reduced, as evidenced by a decrease in the rate of polymerization, to avoid over-pressurization of the reactor. No more than about 60% of the vinyl chloride should be charged initially since it is necessary to generate a prepolymer in situ in order to obtain the stable emulsions.

The quantity of ethylene entering into the copolymer is influenced by the pressure, the mixing, and the addition rate and amount of free radical generating source. Thus, to increase the ethylene content of the copolymer higher pressures, greater mixing and higher free radical source rate and amount are employed.

By way of example, at a polymerization temperature of about 55°C an ethylene pressure in the range of 5.167 to 6.89 MPa (750 psig to 1000 psig) is required to provide a copolymer with about 20—25 wt% ethylene. Above about 6.89 MPa (1000 psig) an undesirable pressure rise occurs while an ethylene pressure below 5.167 MPa (750 psig) yields an unstable emulsion product. It appears that certain amounts of ethylene are needed to be polymerized with the initial vinyl chloride charge to yield a stable emulsion. Needless to say, the 5.167 to 6.89 MPa (750 to 1000 psig) ethylene pressure range for 55°C polymerization would vary with the reaction temperature employed.

The process of forming the vinyl chloride-ethylene copolymer emulsions generally comprises the preparation of an aqueous solution containing substantially all the polyvinyl alcohol dispersing agent. This aqueous solution and the initial charge of vinyl chloride are added to the polymerization vessel and ethylene pressure is applied to the desired value. As previously mentioned, the mixture is thoroughly mixed to dissolve ethylene in the vinyl chloride and in the water phase. Conveniently, the charge is brought to polymerization temperature during this mixing period. Mixing can be effected by shaking, by means of an agitator or other known mechanism.

The polymerization is then initiated by introducing initial amounts of a free radical generating source. For example, either the oxidant or reductant component of a redox system could be initially added to the aqueous medium with the polyvinyl alcohol and vinyl chloride with the other redox component subsequently added to initiate the reaction. With the commencement of initiation, the addition of any third monomer, i.e. olefinically unsaturated copolymerizable monomer, is also begun incrementally. After polymerization has started, delay addition of the free radical generating source is used to continue polymerization until the prepolymer reaction is essentially completed as evidenced by a reduction in the rate of the polymerization. As is well known in the art the rate of polymerization can be followed by plotting the temperature difference ($\Delta T$) between the reaction mixture and the reaction vessel jacket. The point at which $\Delta T$ begins to decrease corresponds to a reduction in the rate of polymerization. At this point, the remaining vinyl chloride is incrementally added along with additional free radical generating source and the remaining olefinically unsaturated monomer as delays to continue the polymerization. By "delay" addition is meant the addition of a component in a continuous or intermittent and, preferably, a substantially uniform rate.

When preparing a vinyl chloride copolymer having a Tg of about 20 to 50°C, the ethylene pressure during the polymerization reaction is neither decreased by venting nor maintained at a substantially steady pressure by the addition of make-up ethylene for that consumed, i.e. ethylene being neither withdrawn nor added during polymerization. Rather the ethylene pressure is permitted to increase, decrease or remain constant, i.e. float, and eventually to reduce gradually as ethylene in the sealed polymerization vessel is copolymerized. Once the requisite ethylene pressure is set in the reactor, it will rise for a short period of time with initiation of polymerization as the vinyl chloride in which it is soluble is reacted to give the polymer in which it is less soluble. After the initially charged vinyl chloride has been reacted and the vinyl chloride delay begun, the pressure essentially stabilizes over the remaining polymerization period and eventually decays. This procedure avoids uncontrollable ethylene pressure rises.

For preparing copolymers having a Tg of about 0 to 20°C, make-up ethylene will be required in suitable pressure reactors. Make-up ethylene is usually that amount needed to maintain the initial pressure.

As mentioned, the reaction is generally continued until the polymerization reaction is no longer self-sustaining, desirably until the residual vinyl chloride content is below 0.5%. The completed reaction product is removed from the presence of ethylene and then maintained at a temperature above the Tg of copolymer while sealed from the atmosphere. The reaction mixture can also be transferred to a degasser with removal of ethylene. The unreacted vinyl chloride monomer content is reduced by its reaction with a vinyl acetate addition.

Another method for producing the vinyl chloride-ethylene copolymers comprises first forming an aqueous emulsion of vinyl chloride and the polyvinyl alcohol stabilizing agent. The reactor is pressurized with ethylene and the resulting reaction mixture is adjusted to a temperature from about 10 to 30°C. Polymerization is initiated by the addition of a free radical source at a rate such that the reaction mixture is brought to a temperature from 45 to 85°C, preferably 50 to 60°C, within a period of 1 hour or less, preferably 30 minutes. The polymerization is continued until the rate of the polymerization begins to reduce. The major portion of the vinyl chloride is then added to the reaction vessel as a delay.

Although the water resistance of the vinyl chloride-ethylene copolymer emulsions of this invention is surprisingly enhanced, the water resistance can be further increased by crosslinking the hydroxyl sites on the polymer polyvinyl alcohol, which is believed to be incorporated into the copolymer, with crosslinking agents. There are many known agents for crosslinking polyvinyl alcohol and these include formaldehyde and other aldehydes, in particular dialdehydes such as glutaraldehyde and glyoxal; dimethylol urea, tetrabutyl titanate, bis-3-methoxyl propylidene, pentaerythritol; diazonium and tetrazonium salts, boric acid. Polyvinyl alcohol may also be crosslinked by radiation. Other agents which might be used are those known to crosslink cellulose, for example N-methylol and N-methylol ether derivatives of amines, amides and ureas, such as dimethylol dihydroxy ethylene urea and ethyl-N,N-dimethylol carbamate; diepoxides such as diglycidyl ether; ethyleneamine derivatives; divinyl sulphone and bis - (2 - hydroxyethyl)-sulphone; epichlorohydrin; phosgene and diacid - dichlorides; and 4,5 - dihydroxy - 1,3 - dimethyl - 2 - imidazolidinone.

Such crosslinking agents typically are added to the polymer emulsion just prior to the coating step in a 1 to 10 wt% range, based on emulsion solids. Acid catalysts such as phosphoric acid, hydrochloric acid, p-toluenesulfonic acid, and oxalic acid are often added to catalyze the crosslinking reaction upon heating of the polymer films or coatings.

The vinyl chloride-ethylene copolymer emulsions may be used to prepare container coating formulations which, when applied to a metal substrate and cured, provide a polymer coating possessing enhanced water resistance. Such container coating formulations generally involve admixing the copolymer emulsions with crosslinking resins, coalescing agents and acid components well known in the art such as melamine formaldehydes, epoxies, dialdehydes, amines, diols, acid catalysts and organic co-solvents. A general can coating formulation would comprise (a) about 45 to 95 wt% copolymer emulsion, (b) about 5 to 40 wt% crosslinking resin, based on solids, (c) up to 10 wt% organic cosolvent (coalescing agent) and, optionally, (d) up to 5 wt% acid catalyst. An illustrative container coating formulation would be a vinyl chloride-ethylene copolymer emulsion according to the invention and Cymel 303 melamine formaldehyde, 90/10 wt%, 40 wt% solids in water/diethylene glycol monoethylether acetate (90/10 wt%). These formulations are then applied to metal substrates such as steel or aluminum by spraying, dipping, roll coating or other application methods well known in the can coating art and cured by heating.

The following examples are provided to illustrate the invention and are not intended to restrict the scope thereof. Test procedures used in evaluating the vinyl chloride copolymer resins for can coatings:

Blushing:

Blushing (film whitening) is observed immediately following removal of coated aluminum panel from test solution and rated using the following scale:

Rating scale 10—0 (10 excellent or no change)

> 10=No blush
> 8=Faint blush
> 6=Moderate blush
> 4=Definite
> 2=Very white
> 0=Terrible, film lifts

Inpact resistance:

ASTM D 2794-69

Pencil hardness:
ASTM D 3363-74

Metal adhesion:
ASTM D 3359-78 using Ericsen Type 295 Adhesion tester

MEK resistance:
A cotton swab saturated with MEK is rubbed back and forth across coated panel until coating is removed or until 100 rubs is reached. One back and forward movement across test panel constitutes one rub.

Example 1

The polymerization of various vinyl chloride-ethylene copolymer emulsions of Runs 1—26 was carried out in a pressure vessel equipped with a jacket and an agitation system involving turbine blades.

In preparing the copolymer emulsion of Run 1 the following initial charge was introduced into the reaction vessel:

| Initial charge | | |
|---|---|---|
| Distilled water | , | 555 g |
| Ferrous ammonium sulfate | | 0.9 g |
| Sequestrine 30A[a] | | 2.7 g |
| Vinol® 205[b] PVOH (12% solution) | | 854 g |

[a] Ethylenediamine tetraacetic acid sodium salt marketed by Ciba-Geigy as a 30% aqueous solution.
[b] An 87 to 89 mole% hydrolyzed PVOH marketed by Air Products and Chemicals, Inc.

The pH of the above charge was adjusted between 4.0 and 4.5 with acetic acid.

The vessel contents were agitated at 200 rpm and purged three times with ethylene (0,172 MPa) (25 psig). Vinyl chloride monomer (240 g) was then added and the reactor was heated to 55°C and pressurized with ethylene (6.028 MPa) (875 psig). The agitation was increased to 900 rpm and 7 ml of 10% aqueous solution of erythorbic acid (pH 4.5) was pumped into the reactor. After the temperature and pressure had been equilibrated, the polymerization was initiated with a 1% aqueous hydrogen peroxide solution. After the rate of polymerization began to decrease (substantially all the vinyl chloride had polymerized with ethylene), the remaining vinyl chloride monomer (1,415 g) was added over a 4 hr period maintaining the polymerization temperature of 55°C using approximately 1.2 g hydrogen peroxide as a 1% solution and 2.7 g erythorbic acid as the activator. Additional oxydant and reductant were used after the vinyl chloride monomer had been added to complete polymerization. A total of 1.67 g hydrogen peroxide as a 1% solution and 5.0 g erythorbic acid were used for the entire polymerization. The ethylene pressure was allowed to "float" during the polymerization without make-up or withdrawal. The emulsion was transferred to a degasser and the unreacted vinyl chloride monomer reduced to less than 10 ppm by the addition of vinyl acetate (15 g) followed by t-butyl hydroperoxide (4 g) and erythorbic acid (3 g), ferrous ammonium sulfate (0.2 g) and sequestrine 30A (0.8 g) in water (50 g). The vinyl chloride-ethylene copolymer of Run 1 was 83 wt% vinyl chloride, 17 wt% ethylene and had a Tg of about 30°C. Emulsion solids were about 55%.

Table 1 shows the amounts of the various monomers and other polymerization components for Runs 2—26 as well as physical data for the resulting emulsions.

In general, for runs 2—26 the above procedure was modified as follows:

The polymerization was initiated at 52°C and the desired ethylene pressure, usually 6.028 MPa (875 psig) to afford a copolymer having a Tg of about 20 to 35°C and suitable for can coating formulations. Upon initiation by the addition of the oxidant ($H_2O_2$) at a fixed rate, the temperature of the polymerization reaction mixture was allowed to rise to 55°C where it was maintained automatically by the heat exchange function of the reaction vessel jacket as is well known in the art. Concomitantly, the pressure would rise, for example from 6.028 MPa (875 psig) to almost (6.54 MPa (950 psig). The jacket temperature began to drop after initiation and, usually, after about one half hour would reach a minimum, namely about 40°C. In approximately 5 to 10 minutes the jacket temperature usuall began to rise corresponding to the time when the rate of polymerization began to decrease. When the jacket temperature approached 45 to 50°C, the amount of oxidant consumed was recorded and the vinyl chloride delay commenced. Again, this initial, or prepolymerization, step avoids the build up of excess unreacted vinyl chloride monomer in the sealed reaction vessel and reduces the possibility of the ethylene vessel pressure approaching the upper pressure limitation of the vessel. If the vinyl chloride monomer delay were commenced at polymerization initiation, an amount of cooling ability, which may be in excess of that of the reactor, would be required to permit reaction of sufficient vinyl chloride and ethylene monomer so as to prevent excessive pressure rise which could exceed the limits of the vessel. Typical plant reactors are not designed to withstand such conditions.

In those Runs in which a terpolymer was made, the olefinically unsaturated comonomer was added in the delay mode upon initiation of the polymerization reaction.

TABLE 1

| Run | 1 | 2 | 3 | 4 | 5 | 6 | 7 | 8 | 9 | 10 | 11 | 12 | 13 |
|---|---|---|---|---|---|---|---|---|---|---|---|---|---|
| Vinyl chloride | 83 | 83 | 83 | 81 | 78 | 80 | 85 | 81 | 83 | 78 | 81 | 93 | 85 |
| Ethylene | 17 | 17 | 17 | 19 | 21 | 20 | 15 | 19 | 17 | 22 | 18 | 6 | 15 |
| Comonomer (%) | — | 3% AAm | — | — | — | — | — | — | — | — | 1% AA | 1% AA | 1% AA |
| Polyvinyl alcohol (%) | 5 | SLS | 5 | 5 | 6 | 6 | 6 | 10 | 10A | 10A | 5 | 5 | 5 |
| Redox system | $H_2O_2$ EA | $NH_4S_2O_4$ SFS | $NH_4S_2O_4$ SFS | $H_2O_2$ EA | - - - - - - - - - - - - - - - - (Same for runs 4—13) - - - - - - - - - - - - - - - - - - - - - - - - - - - - - - - - | | | | | | | | |
| Accelerated sedimentation (%) | — | — | — | 8 | 6 | 7 | 4 | 1 | 2 | 1 | 6 | 3.5 | 15 |
| Tg (°C) | 30 | 30 | 27 | 21.5 | 22.5 | 29 | 34 | 34 | 33.5 | 25 | 26.5 | 25 | 30 |
| Solids (wt%) | — | 50 | 55 | 55 | 46 | 51 | 52 | 50 | 51.5 | 49 | 52 | 52 | 49 |
| Dry film Pencil hardness | — | 2H | 5H | 4H | 5H | 5H | 5H | 4H | 4H | 5H | 4H | 4H | 5H |
| MEK rubs | — | 6 | 3 | 3 | 1 | 2 | 4 | 3 | 3 | 1 | 3 | 3 | 2 |
| Boiling water (2 min) Blush resistance | — | 7 | 6 | 8+ | 9 | 9 | 7 | 9+ | 9 | 7+ | 9+ | 10 | 9 |
| AL adhesion | — | 0 | 9 | 10 | 10 | 10 | 10 | 10 | 10 | 10 | 10 | 10 | 10 |
| Pencil hardness | — | 5B | 4B | H | 2B | — | B | H | H | H | 2B | HB | F |
| Water soak Blush resistance | — | 10 | 10 | 10 | 10 | 10 | 10 | 10 | 10 | 10 | 10 | 10 | 10 |
| Pencil hardness | — | B | HB | 4H | 2H | 4H | F | HB | 5H | 3H | 3H | — | 5H |

A = Polyvinyl alcohol; DPn about 100
AA = Acrylic acid
AAm = Acrylamide
N-i-BMA = N-i-butoxymethylacrylamide

EA = Erythorbic acid
SFS = Sodium formaldehyde sulfoxylate
SLS = Sodium lauryl sulfate

EP 0 150 059 B1

TABLE 1 (Continued)

| Run | 14 | 15 | 16 | 17 | 18 | 19 | 20 | 21 | 22 | 23 | 24 | 25 | 26 |
|---|---|---|---|---|---|---|---|---|---|---|---|---|---|
| Vinyl chloride | 80 | 78 | 78 | 77 | — | 79 | 81 | — | — | — | — | 74 | — |
| Ethylene | 18 | 19 | 21 | 22 | — | 20 | 18 | — | (750 psig) | (700 psig) | (650 psig) | 26 (1100 psig) | (1200 psig & make-up) |
| Comonomer (%) | 2% AA | 3% AA | 1% AA | 3% AA | 3% AA | 1% AAm | 1% N-i-BMA | — | — | — | — | — | — |
| Polyvinyl alcohol (%) | 5 | 5 | 6 | 6 | 6 | 5 | 5 | 4.4 partial delay | 4 | 4 | 4 | 5 | |
| Redox system | $H_2O_2$ EA | | | | | | (Same for runs 14—26) | | | | | | |
| Accelerated sedimentation | 10 | 20 | 1 | 1 | — | 9 | 7 | Extremely gritty | 13 | 20 | 30 | 4 | Aborted |
| Tg (°C) | 23 | 27.5 | 25.5 | 34 | — | 27.5 | 38.5 | discard | 26 | 29 | — | 6 | Pressure rose |
| Solids (wt%) | 53.7 | 53 | 49.5 | 49 | — | 53 | 45.6 | — | — | — | — | 48 | >1400 psig |
| Dry film | | | | | | | | | | | | | |
| Pencil hardness | 4H | 4H | 4H | 4H | 5H | 4H | 5H | | | | | | |
| MEK rubs | 3 | 3 | 3 | 3 | 3 | 3 | 20 | | | | | | |
| Boiling water (2 min) | | | | | | | | | | | | | |
| Blush resistance | 8+ | 7+ | 10 | 10 | 8 | 9+ | 10 | | | | | | |
| AL adhesion | 10 | 8 | 10 | 10 | 10 | 10 | 10 | | | | | | |
| Pencil hardness | 2B | 2B | HB | H | H | 2B | 5H | | | | | | |
| Water soak | | | | | | | | | | | | | |
| Blush resistance | 9+ | 10 | 10 | 10 | 10 | 10 | 10 | | | | | | |
| Pencil hardness | H | 3H | — | — | F | 3H | 5H | | | | | | |

EP 0 150 059 B1

The comparison of Run 2 with Run 3 shows the effect of polyvinyl alcohol in place of an ionic surfactant in the ethylene-vinyl chloride polymerization recipe. The dry film tensile hardness is improved and the adhesion of the film to aluminum is improved significantly as shown by its ability to withstand boiling water. When Run 3 was repeated using a salt-free system in Run 4 (erythorbic acid instead of sodium formaldehyde sulfoxylate as reductant), the blush resistance was improved and the hardness retention of the film after exposure to water was significantly better.

Runs 5—7 demonstrate the effect of increasing the polyvinyl alcohol content to about 6 wt%. An improvement in blush resistance was attained over Run 3. A slight improvement in blush resistance was obtained in Run 8 by the addition of 4 wt% more polyvinyl alcohol to a 10 wt% total polyvinyl alcohol level.

Runs 11—15 show the effect of adding one, two and three percent acrylic acid to a five percent polyvinyl alcohol containing ethylene-vinyl chloride polymerization recipe. Here the blush resistance and the hardness of the film has been improved. Runs 16—18 show the effect of increasing the polyvinyl alcohol content to 6 wt% at one and three percent acrylic acid levels. Outstanding blush resistance and improvement in boiling water film hardness were demonstrated.

Runs 19 and 20 show the five percent polyvinyl alcohol stabilized vinyl chloride-ethylene copolymers also comprising a nitrogen-containing monomer, namely acrylamide and N - isobutoxymethylacrylamide, respectively. Run 19 showed good blush resistance and Run 20 showed excellent blush resistance and hardness. In addition, a substantial improvement in MEK rubs was obtained in Run 20 due to the self-crosslinking nature of N - isobutoxymethylacrylamide.

Run 21 used a partial delay of polyvinyl alcohol to the polymerization recipe. Initially 15% (0.66 g) of the total polyvinyl alcohol (4.4 g) was added prior to initiation and the remainder added by delay addition to the reaction mixture with the vinyl chloride monomer. A suspension-type polymer was obtained (extremely gritty). This Run demonstrates the need for at least 3 wt%, preferably 4 wt%, polyvinyl alcohol in the reaction medium when forming the prepolymer.

Runs 22—24 were performed at ethylene pressure of 5.167, 4.823 and 4,478 MPa (750, 700 and 650 psig), respectively, without ethylene makeup and yielded product which, although low in grits, showed unacceptably high unaccelerated sedimentation values. The maximum acceptable accelerated sedimentation was set as 10%. These Runs show that with no ethylene make up, ethylene pressures of greater than about 5,167 MPa (750 psig) are required to provide the stable vinyl chloride-ethylene copolymer emulsion according to the procedure set forth for Run 2.

Runs 25 and 26 shows that 7,579 MPa (1100 psig) and no ethylene make up provided an acceptable emulsion even though a large amount of redox system was used, while 8,268 MPa (1200 psig) and make up ethylene resulted in aborting the run due to uncontrollable pressure rise.

Example 2

In this example several vinyl chloride-ethylene copolymer emulsions from Example 1 were tested with and without external cross-linkers as films deposited by a #8 wire rod onto aluminum panels and cured for 10 minutes at 193.3°C (380°F). The resultant data are set forth in Table 2. It is apparent from the data that combining the polyvinyl alcohol/vinyl chloride-ethylene copolymers of the invention with cross-linking agents provide a container coating formulation which can deposit a resin film having good water resistance and hardness.

TABLE 2

| Emulsion run | 2 | 2 | 3 | 3 | 9 | 9 | 11 | 11 | 11 | 11 | 11 | 12 |
|---|---|---|---|---|---|---|---|---|---|---|---|---|
| Cross-linker (% solids/solids) | — | 10% Cymel 303 | — | 10% Cymel 303 | — | 10% Cymel 303 | — | 10% DER 732 | 10% Cymel 303 | 10% Cymel 303 MC | 10% Resimene 730 | — |
| pH | — | 4.3 | — | 4.6 | — | 8.0 | 5.3 | — | — | — | — | — |
| Dry film Pencil hardness | 2H | 5H | 5H | 5H | 4H | 5H | 4H | 4H | 5H | 5H | 5H | 4H |
| MEK DBL rub | 6 | 10 | 3 | 4 | 3 | 17 | 3 | 3 | 3 | 10 | 3 | 3 |
| Boiling water Blush resistance (2 min) | 7 | — | 6 | — | 9 | 10 | 9+ | 8 | — | — | — | 10 |
| Blush resistance (30 min) | — | 1 | 0 | 0 | 8 | 10 | 9 | — | 7 | 9 | 6 | 10 |
| AL adhesion (2 min) | 0 | — | 9 | — | 10 | — | 10 | 9+ | — | — | — | — |
| AL adhesion (30 min) | — | 10 | 10 | 0 | 10 | 10 | 10 | — | 4 | 10 | 7 | 10 |
| Pencil hardness (2 min) | 5B | — | 4B | — | 5H | — | 2B | 4B | — | — | — | — |
| Pencil hardness (30 min) | — | 4B | 6B | 5B | H | 3H | F | — | 3B | 2B | 6B | H |
| 24 hour soak (acid/water) Blush resistance (acid) | — | 10 | — | 5 | 10 | 10 | 10 | — | 10 | 10 | — | 10 |
| Blush resistance (water) | 10 | 10 | 10 | 10 | 10 | 10 | 10 | 10 | — | — | — | 10 |
| AL adhesion (acid) | — | 7 | — | 10 | 6 | 10 | 10 | — | 10 | 10 | — | 10 |
| AL adhesion (water) | — | 4 | — | 10 | 10 | 10 | 10 | 9 | — | — | — | 10 |
| Pencil hardness (acid) | — | B | — | F | 3H | 4H | H | — | 2H | 4H | — | H |
| Pencil hardness (water) | B | B | HB | H | 5H | 4H | 3H | HB | — | — | — | 4H |

DER 732 is a water based epoxy resin marketed by Dow Chemical
Cymel 303 is a melamine formaldehyde marketed by American Cyanamid.
Resimene 730 is a melamine formaldehyde marketed by Monsanto.
MC is methyl cellosolve.

TABLE 2 (Continued)

| Emulsion run | 12 | 15 | 15 | 15 | 15 | 15 | 16 | 17 | 17 | 19 | 19 |
|---|---|---|---|---|---|---|---|---|---|---|---|
| Cross-linker (% solids/solids) | 10% Cymel 303 | — | 10% Cymel 303 | — | 10% Resimene 730 | 5% DER 732 | — | — | 10% Cymel 303 MC | — | 10% Cymel 303 |
| pH | — | 5.8 | — | 5.8 | 5.7 | 4.7 | — | — | — | — | 4.6 |
| **Dry film** | | | | | | | | | | | |
| Pencil hardness | 4H | 4H | 5H | 5H | 5H | 5H | 4H | 4H | 5H | 4H | 5H |
| MEK DBL rub | 4 | 3 | 20 | 3 | 12 | 2 | 3 | 3 | 18 | 3 | 3 |
| **Boiling water** | | | | | | | | | | | |
| Blush resistance (2 min) | — | 7+ | — | 8 | 6 | 10 | 10 | 10 | 10 | 9+ | — |
| Blush resistance (30 min) | 9 | 6 | 10 | — | — | — | 10 | 10 | 10 | — | 4 |
| AL adhesion (2 min) | — | 8 | — | 10 | 6 | 10 | — | 10 | — | 10 | — |
| AL adhesion (30 min) | 10 | 10 | 10 | — | — | — | 10 | 10 | 10 | — | 10 |
| Pencil hardness (2 min) | — | 2B | — | HB | 5B | 4B | — | H | — | 2B | — |
| Pencil hardness (30 min) | F | 4B | H | — | — | — | HB | H | H | — | H |
| **24 hour soak (acid/water)** | | | | | | | | | | | |
| Blush resistance (acid) | 10 | 9 | 10 | — | — | — | 10 | 10 | 10 | — | 10 |
| Blush resistance (water) | 10 | 10 | 10 | 10 | 10 | 10 | 10 | 10 | 10 | 10 | 10 |
| AL adhesion (acid) | 10 | 5 | 10 | — | — | — | 10 | 10 | 10 | — | 10 |
| AL adhesion (water) | 10 | 10 | 10 | 10 | 7 | 10 | 10 | 10 | 10 | 10 | 10 |
| Pencil hardness (acid) | H | 5B | H | — | — | — | H | — | 4H | — | 2H |
| Pencil hardness (water) | 3H | 3H | 4H | H | 3B | H | 4H | 3H | 5H | 3H | 4H |

Statement of industrial application

The stable polyvinyl alcohol/vinyl chloride-ethylene copolymer emulsions according to the invention are useful in container coating compositions in that they provide a polymer coating on a metal surface possessing enhanced water resistance, improved dry coating tensile hardness and improved adhesion of the coating to the surface even after exposure to water.

**Claims**

1. A metal container coating composition comprising (a) about 45 to 95 wt% of a stable aqueous vinyl chloride-ethylene copolymer emulsion, the copolymer having a $T_g$ from 0 to 50°C, consisting essentially of about 65 to 90 wt% vinyl chloride, about 5 to 35 wt% ethylene, and up to about 10 wt% $C_3$—$C_{10}$ alkenoic acid or nitrogen-containing comonomer, and prepared by the emulsion polymerization of the monomers in the presence of an emulsifying system consisting essentially of about 3 to 15 wt% polyvinyl alcohol, (b) about 5 to 40 wt% of a crosslinking resin, based on emulsion solids, (c) up to about 10 wt% organic cosolvent and, optionally, (d) up to 5 wt% acid catalyst.

2. The metal container coating composition of Claim 1 in which the copolymer is about 1 to 5 wt% alkenoic acid comonomer.

3. The metal container coating composition of Claim 2 in which the copolymer is prepared by emulsion polymerization in the presence of about 4 to 10 wt% polyvinyl alcohol.

4. The metal container coating composition of Claim 3 in which the copolymer is about 75 to 80 wt% vinyl chloride and has a $T_g$ of about 20 to 35°C.

5. The metal container coating composition of Claim 4 in which the alkenoic acid is acrylic acid.

6. The metal container coating composition of Claim 1 in which the copolymer is about 1 to 5 wt% nitrogen-containing comonomer.

7. The metal container coating composition of Claim 6 in which the copolymer is prepared by emulsion polymerization in the presence of about 4 to 10 wt% polyvinyl alcohol.

8. The metal container coating composition of Claim 7 in which the copolymer is about 75 to 80 wt% vinyl chloride and has a $T_g$ of about 20 to 35°C.

9. The metal container coating composition of Claim 8 in which the nitrogen-containing monomer is acrylamide or N-isobutoxymethyl acrylamide.

10. The metal container coating composition of Claim 1 in which the polymerization is performed using a free radical generating source comprising hydrogen peroxide and ascorbic acid or erythorbic acid as the redox system.

11. The metal container coating composition of Claim 1 in which the emulsion polymerization process comprises

forming an aqueous emulsion reaction mixture in a reaction vessel containing substantially all the polyvinyl alcohol and a portion of the total vinyl chloride monomer,

pressurizing the reaction mixture with an ethylene pressure sufficient to provide the copolymer with a 5 to 35 wt% ethylene content,

initiating the reaction mixture by the addition of a free radical generating source and continuing polymerization until the rate of polymerization begins to decrease,

adding the remaining vinyl chloride over a period of time while continuing polymerization until the reaction is no longer self-sustaining and

removing the unreacted ethylene and reducing the vinyl chloride free monomer content of the emulsion.

12. A metal container coating composition comprising (a) about 45 to 95 wt% of a stable aqueous vinyl chloride-ethylene copolymer emulsion, the copolymer having a $T_g$ from 0 to 50°C, consisting of (i) about 65 to 90 wt% vinyl chloride and (ii) ethylene, and prepared by emulsion polymerization of vinyl chloride monomer and ethylene in the presence of an emulsifying system consisting essentially of about 3 to 15 wt% polyvinyl alcohol, (b) about 5 to 40 wt%, based on emulsion solids, of a crosslinking resin, (c) up to about 10 wt% organic cosolvent and, optionally, (d) up to 5 wt% acid catalyst.

13. The metal container coating composition of Claim 12 in which the emulsion polymerization is performed in the presence of about 4 to 10 wt% polyvinyl alcohol.

14. The metal container coating composition of Claim 13 in which the copolymer is about 75 to 80 wt% vinyl chloride and 20 to 25 wt% ethylene and has a $T_g$ from 20 to 35°C.

15. The metal container coating composition of Claim 12 in which the emulsion polymerization is performed using a redox system comprising hydrogen peroxide and ascorbic acid or erythorbic acid.

16. The metal container coating composition of Claim 12 in which the emulsion polymerization process comprises

forming an aqueous emulsion reaction mixture in a reaction vessel containing substantially all the polyvinyl alcohol and at least 5% to no more than about 60% of the total vinyl chloride monomer,

pressurizing the reaction mixture with an ethylene pressure sufficient to provide the copolymer with the requisite ethylene content,

initiating the reaction mixture by the addition of a free radical generating source and continuing polymerization until the rate of polymerization begins to decrease,

adding the remaining vinyl chloride monomer over a period of time while continuing polymerization until the reaction is no longer self-sustaining, and

removing the unreacted ethylene and reducing the vinyl chloride free monomer content of the emulsion.

17. A metal container coating composition comprising (a) about 45 to 95 wt% of a stable aqueous vinyl chloride-ethylene copolymer emulsion, the copolymer having a $T_g$ from 0 to 50°C, about 65 to 90 wt% vinyl chloride, about 5 to 35 wt% ethylene, 0 to 10 wt% olefinically unsaturated copolymerizable monomer and prepared by emulsion polymerization of vinyl chloride monomer, ethylene and, optionally, an olefinically unsaturated comonomer in the presence of an emulsifying system consisting essentially of about 3 to 15 wt% polyvinyl alcohol, the emulsion polymerization process comprising

forming an aqueous emulsion reaction mixture in a reaction vessel containing substantially all the polyvinyl alcohol and a portion of the total vinyl chloride monomer,

pressurizing the reaction mixture with an ethylene pressure sufficient to provide the copolymer with a 5 to 35 wt% ethylene content,

initiating the reaction mixture by the addition of a free radical generating source and continuing polymerization until the rate of polymerization begins to decrease,

adding the remaining vinyl chloride over a period of time while continuing polymerization until the reaction is no longer self-sustaining, and

removing the unreacted ethylene and reducing the vinyl chloride free monomer content of the emulsion,

(b) about 5 to 40 wt%, based on emulsion solids, of a crosslinking resin,

(c) up to about 10 wt% organic cosolvent, and, optionally, (d) up to 5 wt% acid catalyst.

18. A method for preparing a stable vinyl chloride based resin emulsion which comprises a copolymer colloidally dispersed in an aqueous medium, the copolymer having a Tg from 0 to 50°C, about 65 to 90 wt% vinyl chloride, about 5 to 35 wt% ethylene, 0 to 10 wt% olefinically unsaturated copolymerizable monomer and prepared by emulsion polymerization of vinyl chloride monomer, ethylene and, optionally, an olefinically unsaturated comonomer in the presence of about 3 to 15 wt% polyvinyl alcohol as the dispersing agent, the method which comprises

(a) forming an aqueous emulsion reaction mixture in a reaction vessel containing substantially all the polyvinyl alcohol and at least a portion of the total vinyl chloride monomer,

(b) pressurizing the reaction mixture with an ethylene pressure sufficient to provide the copolymer with a 5 to 35 wt% ethylene content,

(c) initiating the reaction mixture by the addition of a free radical generating source and continuing polymerization until the rate of polymerization begins to decrease,

(d) adding the remaining vinyl chloride over a period of time and continuing polymerization until the reaction is no longer self-sustaining, and

(e) removing the unreacted ethylene and reducing the vinyl chloride free monomer content of the emulsion.

19. The method of Claim 18 in which the copolymer has a Tg from about 20 to 50°C and ethylene is neither withdrawn nor added during the polymerization.

20. The method of Claim 18 in which at least 5% of the total vinyl chloride monomer is added in step (a).

21. The method of Claim 20 in which the copolymer is prepared by the polymerization of the monomers in the presence of 4 to 10 wt% polyvinyl alcohol.

22. The method of Claim 21 in which the copolymer is about 75 to 80 wt% vinyl chloride and 20 to 25 wt% ethylene.

23. The method of Claim 18 in which the copolymerizable monomer is a $C_3$—$C_{10}$ alkenoic acid or a nitrogen-containing monoolefinically unsaturated monomer.

24. The method of Claim 23 in which the alkenoic acid is acrylic acid.

25. The method of Claim 23 in which the nitrogen-containing monomer is acrylamide or N - isobutoxymethylacrylamide.

26. The method of Claim 18 in which the copolymer is prepared in a salt-free polymerization reaction mixture.

27. The method for preparing a stable polyvinyl alcohol/vinyl chloride-ethylene interpolymer emulsion which comprises an interpolymer colloidally dispersed in an aqueous medium, the interpolymer having a Tg from 0 to 50°C, and consisting of about 65 to 90 wt% vinylchloride, about 5 to 35 wt% ethylene, based on monomers, and prepared by emulsion polymerization of the monomers in the presence of about 3 to 15 wt% polyvinyl alcohol as the dispersing agent, the method which comprises

(a) forming an aqueous emulsion reaction mixture in a reaction vessel containing substantially all the polyvinyl alcohol and at least 5% of the total vinyl chloride monomer,

(b) pressurizing the reaction mixture with an ethylene pressure sufficient to provide the interpolymer with a 5 to 35 wt% ethylene content,

(c) initiating the reaction mixture by the addition of a free radical generating source and continuing polymerization until the rate of polymerization begins to decrease,

14

(d) adding the remaining vinyl chloride and continuing polymerization until the reaction is no longer self-sustaining, and

(e) removing the unreacted ethylene and reducing the vinyl chloride free monomer content of the emulsion.

28. The method of Claim 27 in which the interpolymer has a Tg of about 20 to 50°C and ethylene is neither withdrawn nor added during the polymerization.

29. The method of Claim 28 in which the remaining vinyl chloride is added at a substantially uniform rate.

30. The method of Claim 29 in which step (d) is commenced 5 to 10 minutes after the rate of polymerization begins to decrease.

31. The method of Claim 30 in which the vinyl chloride and ethylene are polymerized in the presence of about 4 to 10 wt% polyvinyl alcohol.

32. The method of Claim 31 in which the interpolymer is about 75—80 wt% vinyl chloride and 20—25 wt% ethylene.

33. The method of Claim 27 in which the polymerization is performed in a salt-free reaction medium.

34. The method of Claim 33 in which the free radical generating source comprises hydrogen peroxide and ascorbic acid or erythorbic acid as the redox system.

35. A stable vinyl chloride-ethylene based resin emulsion which comprises a copolymer colloidally dispersed in an aqueous medium, the copolymer having a Tg from 0 to 50°C, consisting essentially of about 65 to 90 wt% vinyl chloride and about 5 to 35 wt% ethylene, and prepared by emulsion polymerization of vinyl chloride monomer and ethylene in the presence of about 3 to 15 wt% polyvinyl alcohol as a dispersing agent.

36. The emulsion of Claim 35 in which the polymerization is performed in the presence of about 4 to 10 wt% polyvinyl alcohol.

37. The emulsion of Claim 36 in which the copolymer is about 75 to 80 wt% vinyl chloride and 20 to 25 wt% ethylene and has a Tg from 20 to 35°C.

38. The emulsion of Claim 35 in which the polymerization is performed in a substantially salt-free reaction medium.

39. A stable vinyl chloride-ethylene based resin emulsion which comprises a copolymer colloidally dispersed in an aqueous medium, the copolymer having a Tg from 0 to 50°C, consisting essentially of about 65 to 90 wt% vinyl chloride, about 5 to 35 wt% ethylene and up to about 10 wt% $C_3$—$C_{10}$ alkenoic acid or nitrogen containing comonomer, and prepared by the emulsion polymerization of the monomers in the presence of about 3 to 15 wt% polyvinyl alcohol as the dispersing agent.

40. The emulsion of Claim 39 in which the copolymer is about 1 to 5 wt% of the alkenoic acid or nitrogen containing comonomer.

41. The emulsion of Claim 40 in which the copolymer is prepared by emulsion polymerization in the presence of about 4 to 10 wt% polyvinyl alcohol.

42. The emulsion of Claim 41 in which the copolymer is about 75 to 80 wt% vinyl chloride and 20 to 25 wt% ethylene and has a Tg of about 20 to 35°C.

43. The emulsion of Claim 40 in which the alkenoic acid is acrylic acid.

44. The emulsion of Claim 40 in which the nitrogen containing monomer is acrylamide, or N-isobutoxymethyl acrylamide.

45. The emulsion of Claim 40 in which the polymerization is performed in the substantially salt-free reaction medium.

**Patentansprüche**

1. Überzugsmittel für einen Metallbehälter, enthaltend (a) etwa 45 bis 95 Gew.-% einer stabilen, wäßrigen Vinylchlorid-Ethylen-Copolymer-Emulsion, wobei das Copolymer einen Tg-Wert von 0 bis 50°C aufweist, die im wesentlichen aus etwa 65 bis 90 Gew.-% Vinylchlorid, etwa 5 bis 35 Gew.-% Ethylen und bis zu etwa 10 Gew.-% $C_3$—$C_{10}$-Alkensäure oder Stickstoffhaltigen Comonomer besteht, und durch Emulsionspolymerisation der Monomeren in Gegenwart eines Emulgiersystems hergestellt wird, das im wesentlichen aus etwa 3 bis 5 Gew.-% Polyvinylalkohol besteht, (b) etwa 5 bis 40 Gew.-% eines Vernetzungsharzes, bezogen auf die Emulsionsfeststoffe, (c) bis zu etwa 10 Gew.-% organisches Co-Lösungsmittel und gegebenenfalls (d) bis zu 5 Gew.-% Säurekatalysator.

2. Überzugsmittel für einen Metallbehälter nach Anspruch 1, worin das Copolymer etwa 1 bis 5 Gew.-% Alkensäurecomonomer ist.

3. Überzugsmittel für einen Metallbehälter nach Anspruch 2, worin das Copolymer durch Emulsionspolymerisation in Gegenwart von etwa 4 bis 10 Gew.-% Polyvinylalkohol hergestellt wird.

4. Überzugsmittel für einen Metallbehälter nach Anspruch 3, worin das Copolymer etwa 75 bis 80 Gew.-% Vinychlorid ist und einen Tg-Wert von etwa 20 bis 35°C besitzt.

5. Überzugsmittel für einen Metallbehälter nach Anspruch 4, worin die Alkensäure Acrylsäure ist.

6. Überzugsmittel für einen Metallbehälter nach Anspruch 1, worin das Copolymer etwa 1 bis 5 Gew.-% stickstoffhaltiges Comonomer enthält.

15

7. Überzugsmittel für einen Metallbehälter nach Anspruch 6, worin das Copolymer durch Emulsionspolymerisation in Gegenwart von etwa 4 bis 10 Gew.-% Polyvinylalkohol hergestellt wird.

8. Überzugsmittel für einen Metallbehälter nach Anspruch 7, worin das Copolymer etwa 75 bis 80 Gew.-% Vinylchlorid enthält und einen Tg-Wert von etwa 20 bis 35°C besitzt.

9. Überzugsmittel für einen Metallbehälter nach Anspruch 8, worin das stickstoffhaltige Monomer Acrylamid oder N-Isobutoxymethylacrylamid ist.

10. Überzugsmittel für einen Metallbehälter nach Anspruch 1, worin die Polymerisation unter Verwendung einer freie Radiale erzeugenden Quelle, umfassend Wasserstoffperoxid und Ascorbinsäure oder Erythorbinsäure als Redoxsystem, durchgeführt wird.

11. Überzugsmittel für einen Metallbehälter nach Anspruch 1, worin das Emulsionspolymerisationsverfahren enthält:

Herstellung einer wäßrigen Emulsionsreaktionsmischung in einem Reaktionsbehälter, der im wesentlichen den gesamten Polyvinylalkohol und einen Teil des gesamten Vinylchloridmonomers enthält,

unter Druck setzen der Reaktionsmischung mit einem Ethylendruck, der ausreicht, um ein Copolymer mit einem Ethylengehalt von 5 bis 35 Gew.-% zu ergeben,

Initiierung der Reaktionsmischung durch Zugabe einer freie Radikale erzeugenden Quelle und Fortführung der Polymerisation bis die Polymerisationsgeschwindigkeit abzufallen beginnt.

Zugabe des restlichen Vinylchlorids über einen Zeitraum, bei gleichzeitiger Fortführung der Polymerisation, bis die Reaktion sich nicht mehr selbst unterhält, und

Entfernung des nicht-reagierten Ethylens und Reduktion des vinylchloridfreien Monomergehaltes der Emulsion.

12. Überzugsmittel für einen Metallbehälter, enthaltend (a) etwa 45 bis 95 Gew.-% einer stabilen, wäßrigen Vinylchlorid-Ethylen-Copolymeremulsion, wobei das Copolymer einen Tg-Wert von 0 bis 50°C besitzt, die im wesentlichen aus (i) etwa 65 bis 90 Gew.-% Vinylchlorid und (ii) Ethylen besteht und durch Emulsionspolymerisation von Vinylchloridmonomer und Ethylen in Gegenwart eines Emulgiersystems, das im wesentlichen aus 3 bis 15 Gew.-% Polyvinylalkohol besteht, hergestellt wird, (b) etwa 5 bis 40 G-w.-%, bezogen auf die Emulsionsfeststoffe, eines Vernetzungsharzes, (c) bis etwa 10 Gew.-% organisches Co-Lösungsmittel und gegebenenfalls (d) bis zu 5 Gew.-% Säurekatalysator.

13. Überzugsmittel für einen Metallbehälter nach Anspruch 12, worin die Emulsionspolymerisation in Gegenwart von etwa 4 bis 10 Gew.-% Polyvinylalkohol durchgeführt wird.

14. Überzugsmittel für einen Metallbehälter nach Anspruch 13, worin das Copolymer etwa 75 bis 80 Gew.-% Vinylchlorid und 20 bis 25 Gew.-% Ethylen enthält und einen Tg-Wert von 20 bis 35°C besitzt.

15. Überzugsmittel für einen Metallbehälter nach Anspruch 12, worin die Emulsionspolymerisation unter Verwendung eines Redoxsystems, das Wasserstoffperoxid und Ascorbinsäure oder Erythorbinsäure umfaßt, durchgeführt wird.

16. Überzugsmittel für einen Metallbehälter nach Anspruch 12, worin das Emulsionspolymerisationsverfahren enthält:

Herstellung einer wäßrigen Emulsionsreaktionsmischung in einem Reaktionsbehälter, der im wesentlichen den gesamten Polyvinylalkohol und wenigstens 5% und nicht mehr als etwa 60% des gesamten Vinylchloridmonomers enthält,

unter Druck setzen der Reaktionsmischung mit einem Ethylendruck, der ausreicht, um ein Copolymer mit dem benötigten Ethylengehalt zu ergeben,

Initiierung der Reaktionsmischung durch Zugabe einer freie Radikale erzeugenden Quelle und Fortführung der Polymerisation bis die Polymerisationsgeschwindigkeit abzufallen beginnt,

Zugabe des restlichen Vinylchlorids über einen Zeitraum, bei gleichzeitiger Fortführung der Polymerisation, bis die Reaktion sich nicht mehr selbst unterhält, und

Entfernung des nicht-reagierten Ethylens und Reduktion des vinylchloridfreien Monomergehaltes der Emulsion.

17. Überzugsmittel für einen Metallbehälter, enthaltend:

(a) etwa 45 bis 95 Gew.-% einer stabilen, wäßrigen Vinylchlorid-Ethylen Copolymeremulsion, wobei das Copolymer einen Tg-Wert von 0 bis 50°C aufweist, etwa 65 bis 90 Gew.-% Vinylchlorid, etwa 5 bis 35 Gew.-% Ethylen, 0 bis 10 Gew.-% olefinisch ungesättigtes copolymerisierbares Monomer, die durch Emulsionspolymerisation von Vinylchloridmonomer, Ethylen und, gegebenenfalls, olefinisch ungesättigtem Comonomer in Gegenwart eines Emulsionssystem hergestellt wird, das im wesentlichen aus etwa 3 bis 15 Gew.-% Polyvinylalkohol besteht, wobei das Emulsionspolymerisationsverfahren enthält:

Herstellung einer wäßrigen Emulsionsreaktionsmischung in einem Reaktionsbehälter, der im wesentlichen den gesamten Polyvinylalkohol und einen Teil des gesamten Vinylchloridmonomers enthält,

unter Druck setzen der Reaktionsmischung mit einem Ethylendruck, der ausreicht, um ein Copolymer mit einem Ethylengehalt von 5 bis 35 Gew.-% zu ergeben,

Initiierung der Reaktionsmischung durch Zugabe einer freie Radikale erzeugenden Quelle und Fortführung der Polymerisation bis die Polymerisationsgeschwindigkeit abzufallen beginnt,

Zugabe des restlichen Vinylchlorids über einen Zeitraum, bei gleichzeitiger Fortführung der Polymerisation, bis die Reaktion sich nicht mehr selbst unterhält, und

Entfernung des nicht-reagierten Ethylens und Reduktion des vinylchloridfreien Monomergehaltes der Emulsion,

(b) etwa 5 bis 40 Gew.-%, bezogen auf die Emulsionsfeststoffe, eines Vernetzungsharzes,

(c) bis zu etwa 10 Gew.-% organisches Co-Lösungsmittel, und gegebenenfalls

(d) bis zu 5 Gew.-% Säurekatalysator.

18. Verfahren zur Herstellung einer stabilen Harzemulsion auf Vinylchloridbasis, die ein kolloidal in einem wäßrigen Medium dispergiertes Copolymer, das einen Tg-Wert von 0 bis 50°C besitzt, etwa 65 bis 90 Gew.-% Vinylchlorid, etwa 5 bis 35 Gew.-% Ethylen, 0 bis 10 Gew.-% olefinisch ungesättigtes copolymerisierbares Monomer enthält, die durch Emulsionspolymerisation von Vinylchloridmonomer, Ethylen und gegebenenfalls einem olefinisch ungesättigten Comonomer in Gegenwart von etwa 3 bis 15 Gew.-% Polyvinylalkohol als Dispersionsmittel hergestellt wird, wobei das Verfahren enthält:

(a) Herstellung einer wäßrigen Emulsionsreaktionsmischung in einem Reaktionsbehälter, der im wesentlichen den gesamten Polyvinylalkohol und wenigstens einen Teil des gesamten Vinylchloridmonomers enthält,

(b) unter Druck setzen der Reaktionsmischung mit einem Ethylendruck, der ausreicht, um ein Copolymer mit einem Ethylengehalt von 5 bis 35 Gew.-% zu ergeben,

(c) Initiierung der Reaktionsmischung durch Zugabe einer freie Radikale erzeugenden Quelle und Fortführung der Polymerisation, bis die Polymerisationsgeschwindigkeit abzufallen beginnt,

(d) Zugabe des restlichen Vinylchlorids über einen Zeitraum, bei gleichzeitiger Fortführung der Polymerisation, bis die Reaktion sich nicht mehr selbst unterhält, und

(e) Entfernung des nicht-reagierten Ethylens und Reduktion des vinylchloridfreien Monomergehaltes der Emulsion.

19. Verfahren nach Anspruch 18, bei dem das Copolymer einen Tg-Wert von etwa 20 bis 50°C besitzt und Ethylen während der Polymerisation weder abgezogen noch zugegeben wird.

20. Verfahren nach Anspruch 18, bei dem mindestens 5% des gesamten Vinylchloridmonomers in Stufe (a) zugegeben wird.

21. Verfahren nach Anspruch 20, bei dem das Copolymer durch Polymerisation der Monomeren in Gegenwart von 4 bis 10 Gew.-% Polyvinylalkohol hergestellt wird.

22. Verfahren nach Anspruch 21, bei dem das Copolymer etwa 75 bis 80 Gew.-% Vinylchlorid und 20 bis 25 Gew.-% Ethylen enthält.

23. Verfahren nach Anspruch 18, bei dem das copolymerisierbare Monomer eine $C_3—C_{10}$-Alkensäure oder ein stickstoffhaltiges, monoolefinisch ungesättigtes Monomer ist.

24. Verfahren nach Anspruch 23, bei dem die Alkensäure Acrylsäure ist.

25. Verfahren nach Anspruch 23, bei dem das stickstoffhaltige Monomer Acrylamid oder N-Isobutoxymethylacrylamid ist.

26. Verfahren nach Anspruch 18, bei dem das Copolymer in einer salzfreien Polymerisations-Reaktionsmischung hergestellt wird.

27. Verfahren zur Herstellung einer stabilen Polyvinylalkohol/Vinylchlorid - Ethylen - Mischpolymer-emulsion, die ein kolloidal in einem wäßrigen Medium dispergiertes Mischpolymer, das einen Tg-Wert von 0 bis 50°C besitzt, enthält und im wesentlichen aus etwa 65 bis 90 Gew.-% Vinylchlorid, etwa 5 bis 35 Gew.-% Ethylen, bezogen auf die Monomeren, besteht und das durch Emulsionspolymerisation von Monomeren in Gegenwart von etwa 3 bis 15 Gew.-% Polyvinylalkohol als Dispersionsmittel hergestellt wird, wobei das Verfahren enthält:

(a) Herstellung einer wäßrigen Emulsionsreaktionsmischung in einem Reaktionsbehälter, der im wesentlichen den gesamten Polyvinylalkohol und mindestens 5% des gesamten Vinylchloridmonomers enthält,

(b) unter Druck setzen der Reaktionsmischung mit einem Ethylendruck, der ausreicht, um das Mischpolymer mit einem Ethylengehalt von 5 bis 35 Gew.-% Ethylen zu versehen,

(c) Initiierung der Reaktionsmischung durch Zugabe einer freie Radikale erzeugenden Quelle und Fortführung der Polymerisation bis die Polymerisationsgeschwindigkeit abzufallen beginnt,

(d) Zugabe des restlichen Vinylchlorid und Fortführung der Polymerisation, bis die Reaktion sich nicht mehr selbst unterhält, und

(e) Entfernung des nicht-reagierten Ethylens und Reduktion des vinylchloridfreien Monomergehaltes der Emulsion.

28. Verfahren nach Anspruch 27, bei dem das Mischpolymer einen Tg-Wert von etwa 20 bis 50°C besitzt und Ethylen während der Polymerisation weder abgezogen noch zugegeben wird.

29. Verfahren nach Anspruch 28, bei dem das restliche Vinylchlorid mit im wesentlichen gleichförmiger Geschwindigkeit zugegeben wird.

30. Verfahren nach Anspruch 29, bei dem Stufe (d) 5 bis 10 Minuten, nachdem die Polymerisationsgeschwindigkeit abzufallen beginnt, eingeleitet wird.

31. Verfahren nach Anspruch 30, bei dem Vinylchlorid und Ethylen in Gegenwart von etwa 4 bis 10 Gew.-% Polyvinylalkohol polymerisiert werden.

32. Verfahren nach Anspruch 31, bei dem das Mischpolymer etwa 75 bis 80 Gew.-% Vinylchlorid und 20 bis 25 Gew.-% Ethylen enthält.

33. Verfahren nach Anspruch 27, bei dem die Polymerisation in einem salzfreien Reaktionsmedium durchgeführt wird.

34. Verfahren nach Anspruch 33, bei dem die freie Radikale erzeugende Quelle Wasserstoffperoxid und Ascorbinsäure oder Erythorbinsäure als Redoxsystem umfaßt.

35. Stabile Harzemulsion auf Vinylchlorid-Ethylenbasis, enthaltend ein in einem wäßrigen Medium kolloidal dispergiertes Copolymer, das einen Tg-Wert von 0 bis 50°C besitzt, im wesentlichen aus etwa 65 bis 90 Gew.-% Vinylchlorid und etwa 5 bis 35 Gew.-% Ethylen besteht und durch Emulsionspolymerisation von Vinylchloridmonomer und Ethylen in Gegenwart von etwa 3 bis 15 Gew.-% Polyvinylalkohol als Dispersionsmittel hergestellt wird.

36. Emulsion nach Anspruch 35, worin die Polymerisation in Gegenwart von etwa 4 bis 10 Gew.-% Polyvinylalkohol durchgeführt wird.

37. Emulsion nach Anspruch 36, worin das Copolymer etwa 75 bis 80 Gew.-% Vinylchlorid und 20 bis 25 Gew.-% Ethylen enthält, und einen Tg-Wert von 20 bis 35°C besitzt.

38. Emulsion nach Anspruch 35, worin die Polymerisation in einem im wesentlichen salzfreien Reaktionsmedium durchgeführt wird.

39. Stabile Harzemulsion auf Vinylchlorid-Ethylen-Basis, enthaltend ein in einem wäßrigen Medium kolloidal dispergiertes Copolymer, wobei das Copolymer einen Tg-Wert von 0 bis 50°C besitzt, im wesentlichen aus etwa 65 bis 90 Gew.-% Vinylchlorid, etwa 5 bis 35 Gew.-% Ethylen und bis zu etwa 10 Gew.-% $C_3$—$C_{10}$-Alkensäure oder stickstoffhaltigem Comonomer besteht, und durch Emulsionspolymerisation des Monomeren in Gegenwart von etwa 3 bis 15 Gew.-% Polyvinylalkohol als Dispersionsmittel hergestellt wird.

40. Emulsion nach Anspruch 39, worin das Copolymer etwa 1 bis 5 Gew.-% Alkensäure oder stickstoffhaltiges Comonomer enthält.

41. Emulsion nach Anspruch 40, worin das Copolymer durch Emulsionspolymerisation in Gegenwart von etwa 4 bis 10 Gew.-% Polyvinylalkohol hergestellt wird.

42. Emulsion nach Anspruch 41, worin das Copolymer etwa 75 bis 80 Gew.-% Vinylchlorid und 20 bis 25 Gew.-% Ethylen enthält und einen Tg-Wert von etwa 20 bis 35°C aufweist.

43. Emulsion nach Anspruch 40, worin die Alkensäure Acrylsäure ist.

44. Emulsion nach Anspruch 40, worin das stickstoffhaltige Monomer Acrylamid oder N-Isobutoxymethylacrylamid ist.

45. Emulsion nach Anspruch 40, worin die Polymerisation in einem im wesentlichen salzfreien Reaktionsmedium durchgeführt wird.

**Revendications**

1. Composition de revêtement des récipients métalliques comprenant (a) environ 45 à 95% en poids d'une émulsion aqueuse de copolymère chlorure de vinyle-éthylène, le copolymère ayant une Tg de 0 à 50°C, étant constitué essentiellement d'environ 65 à 90% en poids de chlorure de vinyle, d'environ 5 à 35% en poids d'éthylène et contenant jusqu'à à environ 10% en poids d'un acide alcénoïque en $C_3$ à $C_{10}$ ou d'un comonomère azoté, et préparé par polymérisation en émulsion des monomères en présence d'un système émulsionnant essentiellement constitué d'environ 3 à 15% en poids d'alcool polyvinylique, (b) d'environ 5 à 40% en poids d'une résine de réticulation, par rapport aux matières solides de l'émulsion, (c) de jusqu'à environ 10% en poids d'un co-solvant organique et, si on le désire, (d) de jusqu'à 5% en poids d'un catalyseur acide.

2. Composition de revêtement des récipients métalliques de la revendication 1, dans laquelle le copolymère contient environ 1 à 5% en poids d'un comonomère d'acide alcénoïque.

3. Composition de revêtement des récipients métalliques de la revendication 2, dans laquelle le copolymère est préparé par polymérisation en émulsion en présence d'environ 4 à 10% en poids d'alcool polyvinylique.

4. Composition de revêtement des récipients métalliques de la revendication 3, dans laquelle le copolymère contient environ 75 à 80% en poids de chlorure de vinyle et a une Tg d'environ 20 à 35°C.

5. Composition de revêtement des récipients métalliques de la revendication 4, dans laquelle l'acide alcénoïque est l'acide acrylique.

6. Composition de revêtement des récipients métalliques de la revendication 1, dans laquelle le copolymère contient environ 1 à 5% en poids d'un comonomère azoté.

7. Composition de revêtement des récipients métalliques de la revendication 6, dans laquelle le copolymère est préparé par polymérisation en émulsion en présence d'environ 4 à 10% en poids d'alcool polyvinylique.

8. Composition de revêtement des récipients métalliques de la revendication 7, dans laquelle le copolymère contient environ 75 à 80% en poids de chlorure de vinyle et a une Tg d'environ 20 à 35°C.

9. Composition de revêtement des récipients métalliques de la revendication 8, dans laquelle le monomère azoté est l'acrylamide ou le N-isobutoxyméthylacrylamide.

10. Composition de revêtement des récipients métalliques de la revendication 1, dans laquelle la polymérisation est effectuée en utilisant une source de radicaux libres comprenant du peroxyde d'hydrogène et de l'acide ascorbique ou de l'acide érythorbique comme système redox.

18

11. Composition de revêtement des récipients métalliques de la revendication 1, dans laquelle le procédé de polymérisation en émulsion comprend

la formation d'un mélange réactionnel en émulsion aqueuse dans un récipient réactionnel contenant la quasi-totalité de l'alcool polyvinylique et une partie du chlorure de vinyle monomère total,

la mise sous pression du mélange réactionnel avec une pression d'éthylène suffisante pour donner au copolymère une teneur en éthylène de 5 à 35% en poids,

l'amorçage du mélange réactionnel par addition d'une source de radicaux libres et la poursuite de la polymérisation jusqu'à ce que la vitesse de polymérisation commence à diminuer,

l'addition du chlorure de vinyle restant sur une certaine durée, tout en poursuivant la polymérisation jusqu'à ce que la réaction ne soit plus auto-entretenue, et

l'élimination de l'éthylène n'ayant pas réagi et la réduction de la teneur en chlorure de vinyle monomère libre de l'émulsion.

12. Composition de revêtement des récipients métalliques comprenant (a) environ 45 à 95% en poids d'une émulsion aqueuse stable de copolymère de chlorure de vinyle-éthylène, le copolymère ayant une Tg de 0 à 50°C, étant constitué (i) d'environ 65 à 90% en poids de chlorure de vinyle et (ii) d'éthylène, et étant préparé par polymérisation en émulsion de chlorure de vinyle monomère et d'éthylène en présence d'un système émulsionnant essentiellement constitué d'environ 3 à 15% en poids d'alcool polyvinylique, (b) d'environ 5 à 40% en poids, par rapport aux matières solides de l'émulsion, d'une résine réticulante, (c) de jusqu'à environ 10% en poids d'un cosolvant organique et, si on le désire, (d) de jusqu'à 5% en poids d'un catalyseur acide.

13. Composition de revêtement des récipients métalliques de la revendication 12, dans laquelle la polymérisation en émulsion est effectuée en présence d'environ 4 à 10% en poids d'alcool polyvinylique.

14. Composition de revêtement des récipients métalliques de la revendication 13, dans laquelle le copolymère contient environ 75 à 80% en poids de chlorure de vinyle et 20 à 25% en poids d'éthylène et a une Tg de 20 à 35°C.

15. Composition de revêtement des récipients métalliques de la revendication 12, dans laquelle la polymérisation en émulsion est effectuée en utilisant un système redox comprenant du peroxyde d'hydrogène et de l'acide ascorbique ou de l'acide érythorbique.

16. Composition de revêtement des récipients métalliques de la revendication 12, dans laquelle le procédé de polymérisation en émulsion comprend

la formation d'un mélange réactionnel en émulsion aqueuse dans un récipient réactionnel contenant la quasi-totalité de l'alcool polyvinylique et au moins 5% à pas plus d'environ 60% du chlorure de vinyle monomère total,

la mise sous pression du mélange réactionnel avec une pression d'éthylène suffisante pour donner au copolymère la teneur voulue en éthylène,

l'amorçage du mélange réactionnel par addition d'une source de radicaux libres et la poursuite de la polymérisation jusqu'à ce que la vitesse de polymérisation commence à diminuer,

l'addition du chlorure de vinyle monomère restant sur une certaine durée, tout en poursuivant la polymérisation jusqu'à ce que la réaction ne soit plus auto-entretenue, et

l'élimination de l'éthylène n'ayant pas réagi et la réduction de la teneur en chlorure de vinyle monomère libre de l'émulsion.

17. Composition de revêtement des récipients métalliques comprenant (a) environ 45 à 95% en poids d'une émulsion aqueuse stable de copolymère chlorure de vinyle-éthylène, le copolymère ayant une Tg de 0 à 50°C, contenant environ 65 à 90% en poids de chlorure de vinyle, environ 5 à 35% en poids d'éthylène, 0 à 10% en poids, d'un monomère copolymérisable à insaturation oléfinique, et préparé par polymérisation en émulsion de chlorure de vinyle monomère d'éthylène, et, si on le désire, d'un comonomère à insaturation oléfinique en présence d'un système émulsionnant essentiellement constitué d'environ 3 à 15% en poids d'alcool polyvinylique, le procédé de polymérisation en émulsion comprenant

la formation d'un mélange réactionnel en émulsion aqueuse dans un récipient réactionnel contenant la quasi-totalité de l'alcool polyvinylique et une partie du chlorure de vinyle monomère total,

la mise sous pression du mélange réactionnel avec une pression d'éthylène suffisante pour donner au copolymère une teneur en éthylène de 5 à 35% en poids,

l'amorçage du mélange réactionnel par addition d'une source de radicaux libres et la poursuite de la polymérisation jusqu'à ce que la vitesse de polymérisation commence à diminuer,

l'addition du chlorure de vinyle restant sur une certaine durée, tout en poursuivant la polymérisation jusqu'à ce que la réaction ne soit plus auto-entretenue, et

l'élimination de l'éthylène n'ayant pas réagi et la réduction de la teneur en chlorure de vinyle monomère libre de l'émulsion,

(b) d'environ 5 à 40% en poids, par rapport aux matières solides de l'émulsion, d'un agent de réticulation,

(c) jusqu'à environ 10% en poids d'un cosolvant organique, et, si on le désire, (d) jusqu'à 10% d'un catalyseur acide.

18. Procédé de préparation d'une émulsion stable de résine à base de chlorure de vinyle qui comprend un copolymère en dispersion colloïdale dans un milieu aqueux, le copolymère ayant une Tg de 0 à 50°C, contenant environ 65 à 90% en poids de chlorure de vinyle, environ 5 à 35% en poids d'éthylène, 0 à 10% en poids d'un monomère copolymérisable à insaturation oléfinique et préparé par polymérisation en émulsion de chlorure de vinyle monomère, d'éthylène, et, si on le désire, d'un comonomère à insaturation oléfinique en présence d'environ 3 à 15% en poids d'alcool polyvinylique comme agent dispersant, le procédé comprenant

(a) la formation d'un mélange réactionnel en émulsion aqueuse dans un récipient réactionnel contenant la quasi-totalité de l'alcool polyvinylique et au moins une partie du chlorure de vinyle monomère total,

(b) la mise sous pression du mélange réactionnel avec une pression d'éthylène suffisante pour donner au copolymère une teneur en éthylène de 5 à 35% en piods,

(c) l'amorçage du mélange réactionnel par addition d'une source de radicaux libres et la poursuite de la polymérisation jusqu'à ce que la vitesse de polymérisation commence à diminuer,

(d) l'addition du chlorure de vinyle restant sur une certaine période et la poursuite la polymérisation jusqu'à ce que la réaction ne soit plus auto-entretenue, et

(e) l'élimination de l'éthylène n'ayant pas réagi et la réduction de la teneur en chlorure de vinyle monomère libre de l'émulsion.

19. Procédé de la revendication 18, dans lequel le copolymère à une Tg d'environ 20 à 50°C et en ce que l'on n'extrait, ni n'ajoute d'éthylène au cours de la polymérisation.

20. Procédé de la revendication 18, dans lequel au moins 5% du chlorure de vinyle monomère total sont ajoutés dans le stade (a).

21. Procédé de la revendication 20, dans lequel le copolymère est préparé par polymérisation des monomères en présence de 4 à 10% en poids d'alcool polyvinylique.

22. Procédé de la revendication 21, dans lequel le copolymère contient environ 75 à 80% en poids de chlorure de vinyle et 20 à 25% en poids d'éthylène.

23. Procédé de la revendication 18, dans lequel le monomère copolymérisable est un acide alcénoïque en $C_3$ à $C_{10}$ ou un monomère azoté à insaturation monooléfinique.

24. Procédé de la revendication 23, dans lequel l'acide alcénoïque est l'acide acrylique.

25. Procédé de la revendication 23, dans lequel le monomère azoté est l'acrylamide ou le N-isobutoxyméthylacrylamide.

26. Procédé de la revendication 18, dans lequel le copolymère est préparé dans un mélange réactionnel de polymérisation exempt de sel.

27. Procédé de préparation d'une émulsion d'interpolymère alcool polyvinylique/chlorure de vinyleéthylène stable qui comprend un interpolymère en dispersion colloïdale dans un milieu aqueux, l'interpolymère ayant une Tg de 0 à 50°C, et étant constitué d'environ 65 à 90% en poids de chlorure de vinyle, d'environ 5 à 35% en poids d'éthylène, par rapport aux monomères, et préparé par polymérisation en émulsion des monomères en présence d'environ 3 à 15% en poids d'alcool polyvinylique comme agent dispersant, le procédé qui comprend

(a) la formation d'un mélange réactionnel en émulsion aqueuse dans un récipient réactionnel contenant la quasi-totalité de l'alcool polyvinylique et au moins 5% du chlorure de vinyle monomère total,

(b) la mise sous pression du mélange réactionnel avec une pression d'éthylène suffisante pour donner à l'interpolymère une teneur en éthylène de 5 à 35% en poids,

(c) l'amorçage du mélange réactionnel par addition d'une source de radicaux libres et la poursuite de la polymérisation jusqu'à ce que la vitesse de polymérisation commence à diminuer,

(d) l'addition du chlorure de vinyle restant et la poursuite la polymérisation jusqu'à ce que la réaction ne soit plus auto-entretenue, et

(e) l'élimination de l'éthylène n'ayant pas réagi et la réduction de la teneur en chlorure de vinyle monomère libre de l'émulsion.

28. Procédé de la revendication 27, dans lequel l'interpolymère à une Tg d'environ 20 à 50°C et l'on n'extrait, ni n'ajoute d'éthylène au cours de la polymérisation.

29. Procédé de la revendication 28, dans lequel le chlorure de vinyle restant est ajoute avec un débit pratiquement uniforme.

30. Procédé de la revendication 29, dans lequel le stade (d) est commencé 5 à 10 minutes après que la vitesse de polymérisation commence à diminuer.

31. Procédé de la revendication 30, dans lequel le chlorure de vinyle et l'éthylène sont polymérisés en présence d'environ 4 à 10% en poids d'alcool polyvinylique.

32. Procédé de la revendication 31, dans lequel l'interpolymère contient d'environ 75 à 80% en poids de chlorure de vinyle et 20 à 25% en poids d'éthylène.

33. Procédé de la revendication 27, dans lequel la polymérisation est effectuée dans un milieu réactionnel exempt de sel.

34. Procédé de la revendication 33, dans lequel la source de radicaux libres comprend du peroxyde d'hydrogène et de l'acide ascorbique ou de l'acide érythorbique comme système redox.

35. Emulsion de résine à base de chlorure de vinyle-éthylène stable qui comprend un copolymère en dispersion colloïdale dans un milieu aqueux, le copolymère ayant une Tg de 0 à 50°C, étant constitué essentiellement d'environ 65 à 90% en poids de chlorure de vinyle et d'environ 5 à 35% en poids d'éthylène, et préparée par polymérisation en émulsion de chlorure de vinyle monomère et d'éthylène en présence d'environ 3 à 15% en poids d'alcool polyvinylique comme agent dispersant.

20

36. Emulsion de la revendication 35, dans lequelle la polymérisation est effectuée en présence d'environ 4 à 10% en poids d'alcool polyvinylique.

37. Emulsion de la revendication 36, dans lequelle le copolymère contient environ 75 à 80% en poids de chlorure de vinyle et 20 à 25% en poids d'éthylène et a une Tg de 20 à 35°C.

38. Emulsion de la revendication 35, dans laquelle la polymérisation est effectuée dans un milieu réactionnel pratiquement exempt de sel.

39. Emulsion de résine à base de chlorure de vinyle-éthylène stable, qui comprend un copolymère en dispersion colloïdale dans un milieu aqueux, le copolymère ayant une Tg de 0 à 50°C, étant constitué essentiellement d'environ 65 à 90% en poids de chlorure de vinyle, d'environ 5 à 35% en poids d'éthylène et de jusqu'à environ 10% en poids d'un acide alcénoïque en $C_3$ à $C_{10}$ ou d'un comonomère azoté, et préparé par polymérisation en émulsion des monomères en présence d'environ 3 à 15% en poids d'alcool polyvinylique comme agent dispersant.

40. Emulsion de la revendication 39, dans lequelle le copolymère contient environ 1 à 5% en poids de l'acide alcénoïque ou du comonomère azoté.

41. Emulsion de la revendication 40, dans laquelle le copolymère est préparé par polymérisation en émulsion en présence d'environ 4 à 10% en poids de l'alcool polyvinylique.

42. Emulsion de la revendication 41, dans laquelle le copolymère contient environ 75 à 80% en poids de chlorure de vinyle et de 20 à 25% en poids d'éthylène et a une Tg d'environ 20 à 35°C.

43. Emulsion de la revendication 40, dans laquelle l'acide alcénoïque est l'acide acrylique.

44. Emulsion de la revendication 40, dans laquelle le monomère azoté est l'acrylamide ou le N-isobutoxyméthylacrylamide.

45. Emulsion de la revendication 40, dans laquelle la polymérisation est effectuée dans un milieu réactionnel pratiquement exempt de sel.